# EUROPEAN PATENT SPECIFICATION

(11) **EP 3 460 512 B1**
(45) Date of publication and mention of the grant of the patent: **16.11.2022**
(21) Application number: 17192368.3
(22) Date of filing: 21.09.2017
(51) Int. Cl.: G01S 13/42, G01S 13/93, G01S 13/931, G01S 13/34, G01S 7/41

(54) **A VEHICLE RADAR FOR ENVIRONMENTAL DETECTION**
FAHRZEUGRADAR ZUR UMFELDERFASSUNG
RADAR DE VÉHICULE POUR DÉTECTION DE L'ENVIRONNEMENT

(43) Date of publication of application: 27.03.2019
(73) Proprietor: Arriver Software AB, 583 30 Linköping (SE)
(72) Inventor: Schmied, Julian, 97421 Schweinfurt (DE); Eisenmann, Stefan, 97762 Hammelburg (DE)
(74) Representative: Loveless, Ian Mark

(56) References cited:
- EP-A1- 2 523 015
- EP-A1- 2 755 044
- EP-A1- 2 998 761
- US-A- 5 668 739
- US-A1- 2016 041 258

## Description

The present disclosure relates to a vehicle FMCW (Frequency Modulated Continuous Wave) radar system comprising a transmitter arrangement, a receiver arrangement and at least one control unit. The radar system is arranged to be mounted in a vehicle and to obtain a plurality of detections from the received reflected signals along a main field of view during at least two radar cycles where each radar cycle comprises a plurality of FMCW signals.

Today, one or more radar systems are often used in vehicles in order to detect obstacles in the surroundings. Such a radar system is usually arranged to distinguish or resolve single targets from the surroundings by using a Doppler effect in a previously well-known manner.

Many vehicle radar systems comprise radar transceivers that are arranged for generating radar signals that are transmitted, reflected and received by means of appropriate antennas comprised in the radar system. The radar signals may for example be in the form of FMCW (Frequency Modulated Continuous Wave) signals.

When detecting the surroundings, it is desirable to distinguish between external objects and objects being attached to the ego vehicle, for example a trailer or a snow blade. Such attached objects can then be disregarded during further processing of acquired radar data.

Such a vehicle radar system is described in US 9594155, where a reflected signal from a radar sensor is used to determine if a detected target corresponds to a trailer towed by the vehicle. An exclusion zone is defined, characterized as occupied by the trailer and thereby excluded from the defined area where objects can be detected.

However, an improved approach is desired.

The object of the present disclosure is thus to provide an improved vehicle radar system that is adapted to distinguish between external objects and objects being attached to the ego vehicle.

Said object is achieved by means of a vehicle FMCW (Frequency Modulated Continuous Wave) radar system comprising a transmitter arrangement, a receiver arrangement and at least one control unit. The radar system is arranged to be mounted in a vehicle and to obtain a plurality of detections from the received reflected signals along a main field of view during at least two radar cycles where each radar cycle comprises a plurality of FMCW signals. For each radar cycle, said control unit is arranged to form a spectrum density map that comprises range and angle spectrum for each detection in a grid pattern and to combine at least two spectrum density maps to form a combined spectrum density map. Said control unit is arranged to determine that each part of the combined spectrum density map that has given rise to a reflected energy amount exceeding a certain threshold constitutes a zone that is disregarded in further processing of acquired radar data.

Said object is also achieved by means of a method for a vehicle FMCW (Frequency Modulated Continuous Wave) radar system that is used in a vehicle, where the method comprises:
Transmitting signals, receiving reflected signals, and obtaining a plurality of detections from the received reflected signals along a main field of view during at least two radar cycles, where each radar cycle comprises a plurality of FMCW ramps for each radar cycle. The method further comprises forming a spectrum density map that comprises range and angle spectrum for each detection in a grid pattern using detections along the main field of view, and combining at least two spectrum density maps to form a combined spectrum density map.

The method further comprises determining that each part of the combined spectrum density map that has given rise to a reflected energy amount exceeding a certain threshold constitutes a zone that is disregarded in further processing of acquired radar data. According to some aspects, said control unit is arranged to calculate each spectrum density map by means of either data from a range FFT (Fast Fourier Transform) function or a Doppler FFT function, where the radar system comprises a DSP (Digital Signal Processor) function that is arranged to perform said FFT functions.

According to some aspects, said control unit is arranged to perform an integration over a plurality of spectrum density maps acquired during a certain number of radar cycles, and to select and group those detections that have given rise to a reflected energy amount exceeding said certain threshold.

The present invention is defined in the independent claims. Preferred embodiments are defined in the dependent claims.

A number of advantages are obtained by means of the present disclosure. Mainly, a vehicle radar system is disclosed that is adapted to distinguish between external objects and objects being attached to the ego vehicle. In this manner, processing of acquired radar data can be simplified since all radar data belonging to such attached objects can be disregarded.

### BRIEF DESCRIPTION OF THE DRAWINGS

The present disclosure will now be described more in detail with reference to the appended drawings, where:
- Figure 1: shows a schematic side view of a vehicle;
- Figure 2: shows a simplified schematic view of a radar system according to the present disclosure;
- Figure 3: shows a chirp signal;
- Figure 4: shows a schematic top view of a vehicle moving forward, where a Cartesian grid for a complete range and angle spectrum is formed;
- Figure 5: shows a schematic top view of an alternative vehicle moving forward; and
- Figure 6: shows a flowchart for a method according to the present disclosure.

### DETAILED DESCRIPTION

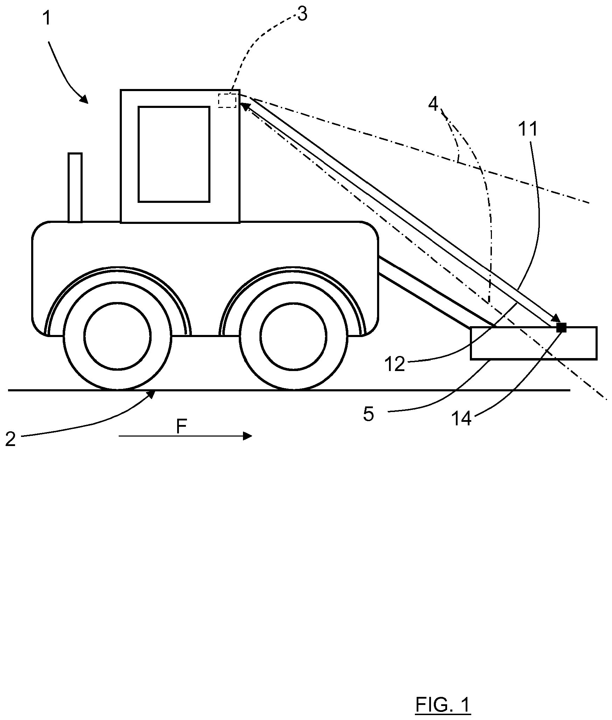

Figure 1 schematically shows a side view an ego vehicle 1 in the form of a work vehicle that runs on a road 2 in a forward direction F, where the ego vehicle 1 comprises a vehicle radar system 3 which is arranged to distinguish and/or resolve single targets from the surroundings by using a Doppler effect in a previously well-known manner, i.e. successive echoes from the same point are superimposed and identified by means of Doppler effect. The radar system 3 is in this example positioned on the top side of the vehicle 1, and has a main field of view 4 that is aimed in a down-looking manner.

The ego vehicle carries a work tool 5, here in the form of a weed mower; other examples of work tools are snow blade, asphalt cutter, shovel etc.

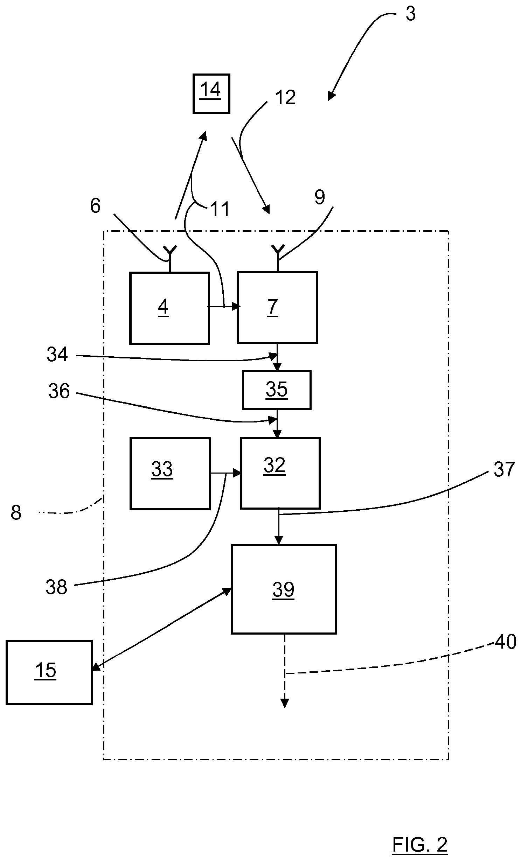

With reference also to Figure 2, the radar system 3 comprises a transceiver arrangement 8 that is arranged for generating and transmitting sweep signals in the form of FMCW (Frequency Modulated Continuous Wave) chirp signals 11, and to receive reflected signals 12, where the transmitted chirp signals 11 have been reflected such that a detection 14 that here is comprised in the work tool 5 is obtained.

The transceiver arrangement 8 comprises a transmitter arrangement 4 with a transmit antenna arrangement 6, a receiver arrangement 7 with a receiver antenna arrangement 9, an Analog to Digital Converter (ADC) arrangement 32 and sampling and timing arrangement 33.

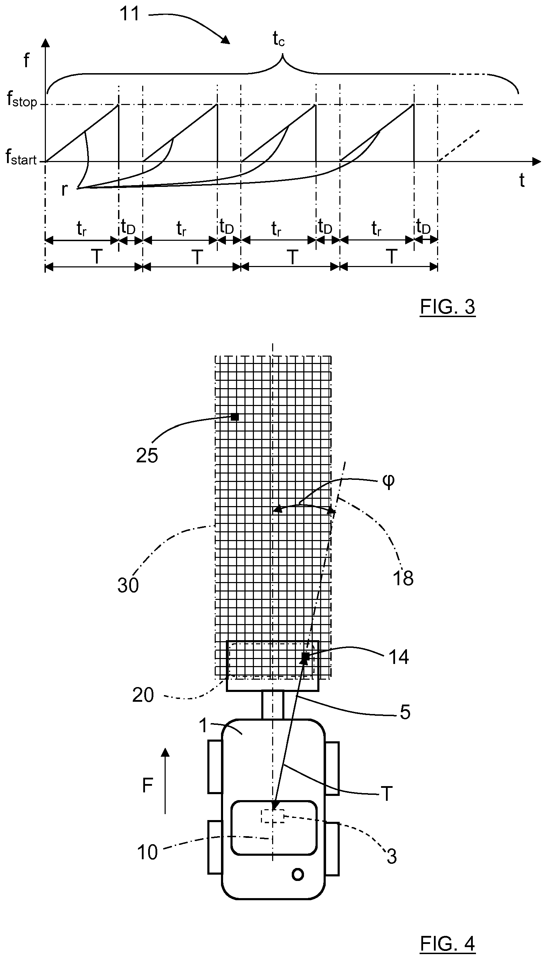

More in detail, with reference to Figure 3, the transmitted chirp signal 11 is in the form of a continuous sinusoid where the frequency varies from a first frequency fₛₜₐᵣₜ to a second frequency fₛₜₒₚ over the course of a ramp, where the magnitude of the first frequency fₛₜₐᵣₜ falls below the magnitude of the second frequency fₛₜₒₚ.

The chirp signal 11 comprises repeating cycles of a plurality N of frequency ramps r where a radar cycle for the chirp signal 11 lasts for a certain radar cycle time t_{c}, each ramp lasting a certain ramp time tᵣ and where there is a certain delay time t_{D} between adjacent ramps r. Each ramp r has a period time T that equals a sum of the ramp time tᵣ and the delay time t_{D}. The delay time t_{D} can according to some aspects be essentially zero.

With renewed reference to Figure 2, the reflected signals 12 are received by the receiver arrangement 7 via the receiver antenna arrangement 9. The received signals 12, thus constituted by reflected radar echoes, are then mixed with the transmitted chirp signals 11 in the receiver arrangement 9. This may be a single channel mixer, or a two channel mixer comprising both in-phase and quadrature components. In this way, an IF (Intermediate Frequency) signal 34 is acquired, which may be real or, in the case of quadrature mixer, imaginary. The IF signal 34 is filtered in an IF filter 35 such that a filtered IF signal 36 is acquired.

The frequency of the filtered IF signal 36 relates to the target distance and is transferred to the corresponding ADC arrangement 32, where the filtered IF signal 36 is sampled at a certain predetermined sampling frequency fₛ and converted to a digital IF signal 37 comprising sample points in a previously known manner, the sampling frequency fₛ being provided in the form of a sampling and timing signal 38 produced by the sampling and timing arrangement 33 that is connected to the ADC arrangement 32.

The ADC arrangement 32 is connected to a DSP arrangement 39 that is adapted to execute an FFT (Fast Fourier Transform) processing of an FMCW radar signal to extract objects within the field of view 4. For such processing, a range FFT function is normally arranged to convert the filtered digital IF signal 36 to a range domain, and a Doppler FFT function is arranged to combine the results from successive chirp signal ramps, or other suitable Doppler radar cycles, into the Doppler domain. This results in an output 40 comprising Range-Doppler matrices that are transferred for further processing, which is not further discussed here, many examples of such further processing being well-known in the art. It is an object of the present disclosure to simplify said further processing.

The radar system 3 also comprises a control unit 15. The control unit 15 should be regarded as a control unit arrangement that is in the form of one unit or several units that either co-operate or handle different tasks more or less independently. In the case of several units, these may be placed adjacent to each other, or in a distributed manner. The control unit is here shown connected to the DSP arrangement 39, of course this is not necessary; the control unit 15 may be connected to several components and/or other control units and can either comprise the DSP arrangement or be comprised in the DSP arrangement. In Figure 2, the control unit 15 is shown outside the transceiver arrangement 8, but as understood from the above, this is not necessary.

With reference to Figure 1 and Figure 2, when in use, the transmitter antenna arrangement 6 sends a transmitted signal 11 when the vehicle 1 runs in the forward direction F. The radar system 3 then receives echoes of the transmitted signals 11 by means of the receiver antenna arrangement 9 where the transmitted signals 11 is reflected such that detections 14 are obtained; in Figure 1 a detection 14 is shown at the work tool 5.

The above is repeated as many times as necessary at a predetermined frequency band, while the vehicle moves in the forward direction F.

With reference also to Figure 4, each measure results in a detection 14, 25 (only two detections shown in Figure 4 for reasons of clarity), where the control unit 15 is arranged to use each detection 14, 25 to form a spectrum density map 30 for each radar cycle along the main field of view 4. As the vehicle 1 moves in the forward direction F, the main field of view 4 moves along, and in this manner a complete spectrum density mapping of a certain area is obtained by combining several spectrum density maps from a corresponding plurality of radar cycles. The control unit 15 is thus arranged to combine at least two spectrum density maps to form a combined spectrum density map.

In this context, a radar cycle is one observation phase in which the radar acquires data, processes the date on several signal processing levels and sends out available results. This can be a fixed time interval (i.e. 40 to 60 milliseconds), or it can be a dynamic time interval depending on environment conditions and processing load.

According to some aspects, the spectrum density map 30 comprises range and angle spectrum data. Generally, the spectrum density map 30 comprises a calculated returned amount of energy from stationary detections. The data comprised in the spectrum density map 30 may be taken from either the range FFT function or the Doppler FFT function.

Each detection 14, 25 is thus detected several times as the vehicle 1 moves in the forward direction F during a plurality of sample times, where, at each sample time, detections 14, 25 within the field of view 4 are detected. For each such detection 14, 25, a position is determined with respect to the ego vehicle 1, where the position is defined by a target distance T, running between the detection 14 and the vehicle radar system 3, and a target angle ϕ running between a reference line 10, here running parallel to the forward direction F, and an extension 18 of the target distance T.

A complete spectrum density map 30 is then acquired in a Cartesian grid and is combined from all radar cycles during a certain time, providing a dense estimation of energy returns 14, 25 instead of single separate detection points, where no dynamic data is needed for the spectrum density map 30. An energy return is any type of received reflection, for example from a detection 14 25. In this way, a two-dimensional detailed top view of the detections 14, 25 is obtained, where all energy returns are accounted for. There is a plurality of grid squares or points, where each grid point relates to a plurality of detections acquired and accumulated during said certain time.

According to the present disclosure, by means of the now acquired complete spectrum density map 30, it is possible to acquire information regarding zones where there is a large number of detections, or energy returns, and these zones are subject to analysis where it is determined whether these zones are to be disregarded or not, i.e. if it is determined whether these zones arise due to details mounted or connected to the ego vehicle 1 or not.

In practice, for a certain number of radar cycles, an integration is performed over the complete spectrum density map 30, and those grid points that have given rise to a reflected energy amount exceeding a certain threshold are selected and grouped, and such a group that is determined to constitutes a zone is disregarded in the further processing of acquired radar data. In this manner, such further processing is simplified.

In Figure 4, there is such a zone 20 that corresponds to a group of grid points that relates to the work tool 5. At a detection 25, the corresponding grid point has not given rise to a reflected energy amount that exceeds said threshold.

According to some aspects, there may instead be a rearward-looking radar system, or several radar systems covering several fields around the vehicle. Such a coverage is desired for automatic driver assistance systems, where the control and driving of the vehicle 1 is more or less automated.

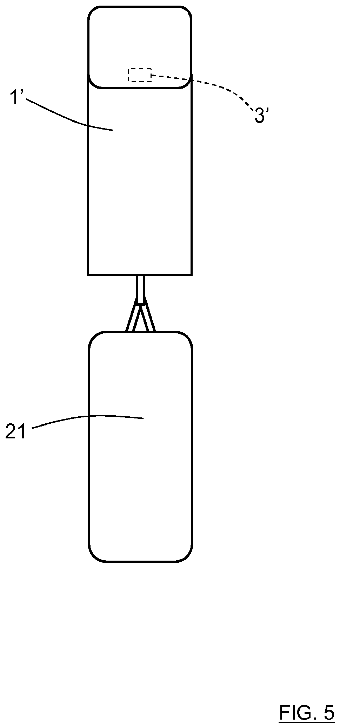

In Figure 5, a truck 1' is connected to a trailer 21 and comprises a radar system 3' that is rearward-looking. Here, the trailer 21 will give rise to a zone that will be disregarded in the further processing of acquired radar data in the same manner as for the work vehicle 1 described above.

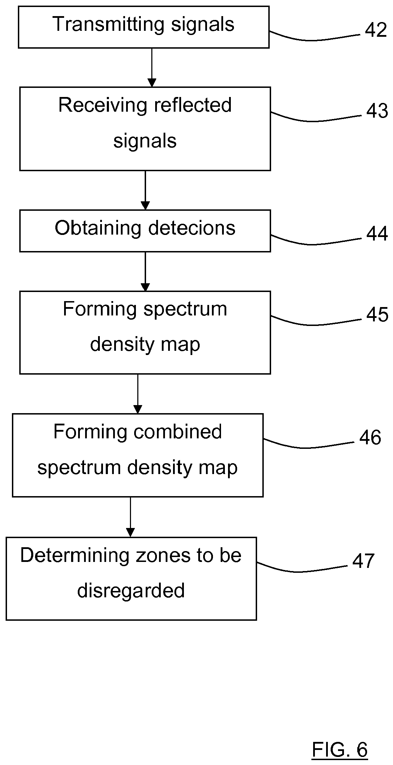

With reference to Figure 6, the present disclosure also relates to a method for a vehicle FMCW (Frequency Modulated Continuous Wave) radar system 3 that is used in a vehicle 1, where the method comprises:
42: Transmitting signals 11.
43: Receiving reflected signals 12.
44: Obtaining a plurality of detections 14, 25 from the received reflected signals 12 along a main field of view 4 during at least two radar cycles, where each radar cycle comprises a plurality of FMCW ramps.
45: For each radar cycle, forming a spectrum density map 30 that comprises range and angle spectrum for each detection 14, 25 in a grid pattern 30 using detections 14, 25 along the main field of view 4.
46: Combining at least two spectrum density maps 30 to form a combined spectrum density map.
47: Determining that each part of the combined spectrum density map that has given rise to a reflected energy amount exceeding a certain threshold constitutes a zone 20 that is disregarded in further processing of acquired radar data.

The present disclosure is not limited to the examples above, but may vary freely within the scope of the appended claims. For example, the radar system may be implemented in any type of vehicle such as cars, trucks and buses as well as boats and aircraft.

All drawings are simplified, only showing parts that are considered relevant for an adequate description of the present disclosure. It is understood that the general design of radar systems of this kind is well-known in the art.

The constitution of the antenna devices comprised in the transmitter antenna arrangement 6 and the receiver antenna arrangement 9 may be of any suitable design, such as slot antennas of patch antennas. The transmitter antenna arrangement 6 and receiver antenna arrangement 9 may be combined in one antenna arrangement that is arranged for both transmission and reception by means of, for example, time division.

The FMCW ramps can have any suitable shape such as saw-tooth or running from a higher frequency to a lower frequency, and are generally constituted by FMCW signals.

Generally, the present disclosure relates to a vehicle FMCW (Frequency Modulated Continuous Wave) radar system 3 comprising a transmitter arrangement 4, a receiver arrangement 7 and at least one control unit 15, the radar system 3 being arranged to be mounted in a vehicle 1, where the radar system 3 is arranged to obtain a plurality of detections 14, 25 from the received reflected signals 12 along a main field of view 4 during at least two radar cycles where each radar cycle comprises a plurality of FMCW signals, where, for each radar cycle, said control unit 15 is arranged to form a spectrum density map 30 that comprises range and angle spectrum for each detection 14, 25 in a grid pattern 30 and to combine at least two spectrum density maps to form a combined spectrum density map. Said control unit 15 is arranged to determine that each part of the combined spectrum density map that has given rise to a reflected energy amount exceeding a certain threshold constitutes a zone 20 that is disregarded in further processing of acquired radar data.

According to some aspects, said control unit 15 is arranged to calculate each spectrum density map 30 by means of either data from a range FFT (Fast Fourier Transform) function or a Doppler FFT function, where the radar system 3 comprises a DSP (Digital Signal Processor) function 39 that is arranged to perform said FFT functions.

According to some aspects, said control unit 15 is arranged to perform an integration over a plurality of spectrum density maps 30 acquired during a certain number of radar cycles, and to select and group those detections 14 that have given rise to a reflected energy amount exceeding said certain threshold.

Generally, the present disclosure also relates to a method for a vehicle FMCW (Frequency Modulated Continuous Wave) radar system 3 that is used in a vehicle 1, where the method comprises:
42: transmitting signals 11;
43: receiving reflected signals 12; and
44: obtaining a plurality of detections 14, 25 from the received reflected signals 12 along a main field of view 4 during at least two radar cycles, where each radar cycle comprises a plurality of FMCW signals,
45: for each radar cycle, forming a spectrum density map 30 that comprises range and angle spectrum for each detection 14, 25 in a grid pattern 30 using detections 14, 25 along the main field of view 4;
46: combining at least two spectrum density maps 30 to form a combined spectrum density map; and
47: determining that each part of the combined spectrum density map that has given rise to a reflected energy amount exceeding a certain threshold constitutes a zone 20 that is disregarded in further processing of acquired radar data.

According to some aspects, each spectrum density map 30 is calculated by either using data from a range FFT (Fast Fourier Transform) function or using a Doppler FFT function.

According to some aspects, the method comprises:
performing an integration over a plurality of spectrum density maps 30 acquired during a certain number of radar cycles, and
selecting and grouping those detections 14 that have given rise to a reflected energy amount exceeding said certain threshold enabling one or more zones 20 that are disregarded in further processing of acquired radar data to be formed.

## Claims

1. A vehicle FMCW, Frequency Modulated Continuous Wave, radar system (3) comprising a transmitter arrangement (4), a receiver arrangement (7) and at least one control unit (15), the radar system (3) being arranged to be mounted in a vehicle (1), where the radar system (3) is arranged to obtain a plurality of detections (14, 25) from received reflected signals (12) along a main field of view (4) during at least two radar cycles where each radar cycle comprises a plurality of FMCW signals, where, for each radar cycle, said control unit (15) is arranged to form a spectrum density map (30) that comprises range and angle spectrum for each detection (14, 25) in a grid pattern (30), as well as a calculated returned amount of reflected energy from stationary detections, and to combine at least two spectrum density maps to form a combined spectrum density map such that each grid point in the grid pattern (30) relates to a plurality of detections acquired and accumulated during a certain time,
wherein said control unit (15) is arranged to determine that each part of the combined spectrum density map that has given rise to a reflected energy amount exceeding a certain threshold constitutes a zone (20) that is disregarded in further processing of acquired radar data.

2. A radar system according to claim 1, wherein said control unit (15) is arranged to calculate each spectrum density map (30) by means of either data from a range FFT, Fast Fourier Transform, function or a Doppler FFT function, where the radar system (3) comprises a DSP, Digital Signal Processor, function (39) that is arranged to perform said FFT functions.

3. A radar system according to any one of the claims 1 or 2, wherein said control unit (15) is arranged to perform an integration over the acquired combined spectrum density map, and to select and group those detections (14) that have given rise to a reflected energy amount exceeding said certain threshold.

4. A method performed by a vehicle FMCW, Frequency Modulated Continuous Wave, radar system (3) that is used in a vehicle (1), where the method comprises:
(42) transmitting signals (11);
(43) receiving reflected signals (12); and
(44) obtaining a plurality of detections (14, 25) from received reflected signals (12) along a main field of view (4) during at least two radar cycles, where each radar cycle comprises a plurality of FMCW signals,
(45) for each radar cycle, forming a spectrum density map (30) that comprises range and angle spectrum for each detection (14, 25) in a grid pattern (30), as well as a calculated returned amount of reflected energy from stationary detections, using detections (14, 25) along the main field of view (4); and
(46) combining at least two spectrum density maps (30) to form a combined spectrum density map such that each grid point in the grid pattern (30) relates to a plurality of detections acquired and accumulated during a certain time;
wherein the method further comprises:
(47) determining that each part of the combined spectrum density map that has given rise to a reflected energy amount exceeding a certain threshold constitutes a zone (20) that is disregarded in further processing of acquired radar data.

5. The method according to claim 4, wherein each spectrum density map (30) is calculated by either using data from a range FFT, Fast Fourier Transform, function or using a Doppler FFT function.

6. The method according to any of the claims 4 or 5, wherein the method comprises: performing an integration over the acquired combined spectrum density map, and selecting and grouping those detections (14) that have given rise to a reflected energy amount exceeding said certain threshold enabling one or more zones (20) that are disregarded in further processing of acquired radar data to be formed.

## Patentansprüche

1. Fahrzeug-FMCW-(Frequency Modulated Continuous Wave)-Radarsystem (3), das eine Senderanordnung (4), eine Empfängeranordnung (7) und mindestens eine Steuereinheit (15) umfasst, wobei das Radarsystem (3) zum Montieren in einem Fahrzeug (1) ausgelegt ist, wobei das Radarsystem (3) zum Gewinnen mehrerer Detektionen (14, 25) aus empfangenen reflektierten Signalen (12) entlang eines Hauptsichtfeldes (4) während mindestens zweier Radarzyklen ausgelegt ist, wobei jeder Radarzyklus mehrere FMCW-Signale umfasst, wobei die genannte Steuereinheit (15), für jeden Radarzyklus, zum Bilden einer Spektraldichtekarte (30), die ein Entfernungsund Winkelspektrum für jede Detektion (14, 25) in einem Gittermuster (30) sowie eine berechnete zurückgeworfene Menge an reflektierter Energie von stationären Detektionen umfasst, und zum Kombinieren von mindestens zwei Spektraldichtekarten ausgelegt ist, um eine kombinierte Spektraldichtekarte zu bilden, so dass sich jeder Gitterpunkt in dem Gittermuster (30) auf mehrere während einer bestimmten Zeit erfasste und akkumulierte Detektionen bezieht, wobei die genannte Steuereinheit (15) ausgelegt ist zum Feststellen, dass jeder Teil der kombinierten Spektraldichtekarte, der dazu geführt hat, dass eine Menge an reflektierter Energie einen bestimmten Schwellenwert überschreitet, eine Zone (20) bildet, die bei einer weiteren Verarbeitung von erfassten Radardaten außer Acht gelassen wird.

2. Radarsystem nach Anspruch 1, wobei die genannte Steuereinheit (15) zum Berechnen jeder Spektraldichtekarte (30) entweder anhand von Daten aus einer Entfernungs-FFT-(Fast Fourier Transform)-Funktion oder einer Doppler-FFT-Funktion ausgelegt ist, wobei das Radarsystem (3) eine DSP-(Digitaler Signalprozessor)-Funktion (39) umfasst, die zum Ausführen der genannten FFT-Funktionen ausgelegt ist.

3. Radarsystem nach Anspruch 1 oder 2, wobei die genannte Steuereinheit (15) zum Durchführen einer Integration über die erfasste kombinierte Spektraldichtekarte und zum Auswählen und Gruppieren derjenigen Detektionen (14) ausgelegt ist, die dazu geführt haben, dass eine Menge an reflektierter Energie den bestimmten Schwellenwert überschreitet.

4. Verfahren, durchgeführt von einem Fahrzeug-FMCW-(Frequency Modulated Continuous Wave)-Radarsystem (3), das in einem Fahrzeug (1) verwendet wird, wobei das Verfahren Folgendes beinhaltet:
(42) Senden von Signalen (11);
(43) Empfangen von reflektierten Signales (12); und
(44) Gewinnen mehrerer Detektionen (14, 25) von empfangenen reflektierten Signalen (12) entlang eines Hauptsichtfeldes (4) während mindestens zweier Radarzyklen, wobei jeder Radarzyklus mehrere FMCW-Signale umfasst,
(45) Bilden, für jeden Radarzyklus, einer Spektraldichtekarte (30), die ein Entfernungs- und Winkelspektrum für jede Detektion (14, 25) in einem Gittermuster (30) sowie eine berechnete zurückgeworfene Menge an reflektierter Energie von stationären Detektionen umfasst, mit Hilfe von Detektionen (14, 25) entlang des Hauptsichtfeldes (4); und
(46) Kombinieren von mindestens zwei Spektraldichtekarten (30) zum Bilden einer kombinierten Spektraldichtekarte, so dass sich jeder Gitterpunkt in dem Gittermuster (30) auf mehrere während einer bestimmten Zeit erfasste und akkumulierte Detektionen bezieht;
wobei das Verfahren ferner Folgendes beinhaltet:
(47) Feststellen, dass jeder Teil der kombinierten Spektraldichtekarte, der dazu geführt hat, dass eine Menge an reflektierter Energie einen bestimmten Schwellenwert überschreitet, eine Zone (20) bildet, die bei einer weiteren Verarbeitung der erfassten Radardaten außer Acht gelassen wird.

5. Verfahren nach Anspruch 4, wobei jede Spektraldichtekarte (30) entweder anhand von Daten aus einer Entfernungs-FFT-(Fast Fourier Transform)-Funktion oder mittels einer Doppler-FFT-Funktion berechnet wird.

6. Verfahren nach Anspruch 4 oder 5, wobei das Verfahren Folgendes beinhaltet:
Durchführen einer Integration über die erfasste kombinierte Spektraldichtekarte und Auswählen und Gruppieren derjenigen Detektionen (14), die dazu geführt haben, dass eine Menge an reflektierter Energie den bestimmten Schwellenwert überschreitet, so dass eine oder mehrere Zonen (20) gebildet werden kann/können, die bei der weiteren Verarbeitung der erfassten Radardaten außer Acht gelassen werden.

## Revendications

1. Système radar FMCW, onde continue modulée en fréquence, pour véhicule (3) comprenant un arrangement de transmetteur (4), un arrangement de récepteur (7) et au moins une unité de commande (15), le système radar (3) étant arrangé pour être monté dans un véhicule (1), où le système radar (3) est arrangé pour obtenir une pluralité de détections (14, 25) de signaux réfléchis reçus (12) le long d'un champ de vision principal (4) durant au moins deux cycles radar où chaque cycle radar comprend une pluralité de signaux FMCW, où, pour chaque cycle radar, ladite unité de commande (15) est arrangée pour former une carte de densité spectrale (30) qui comprend un spectre de distance et d'angle pour chaque détection (14, 25) dans un quadrillage (30), ainsi qu'une quantité renvoyée calculée d'énergie réfléchie de détections stationnaires, et pour combiner au moins deux cartes de densité spectrale afin de former une carte de densité spectrale combinée de telle sorte que chaque point de grille dans le quadrillage (30) se rapporte à une pluralité de détections acquises et accumulées durant un certain temps,
dans lequel ladite unité de commande (15) est arrangée pour déterminer que chaque partie de la carte de densité spectrale combinée qui a donné lieu à une quantité d'énergie réfléchie dépassant un certain seuil constitue une zone (20) qui est ignorée dans un traitement ultérieur de données radar acquises.

2. Système radar selon la revendication 1, dans lequel ladite unité de commande (15) est arrangée pour calculer chaque carte de densité spectrale (30) au moyen soit de données d'une fonction FFT, transformée de Fourier accélérée, de distance, soit d'une fonction FFT du Doppler, où le système radar (3) comprend une fonction DSP, processeur de signaux numériques, (39) qui est arrangée pour exécuter lesdites fonctions FFT.

3. Système radar selon l'une quelconque des revendications 1 ou 2, dans lequel ladite unité de commande (15) est arrangée pour exécuter une intégration sur la carte de densité spectrale combinée acquise, et pour sélectionner et grouper ces détections (14) qui ont donné lieu à une quantité d'énergie réfléchie dépassant un certain seuil.

4. Procédé exécuté par un système radar FMCW, onde continue modulée en fréquence, (3) qui est utilisé dans un véhicule (1), où le procédé comprend :
(42) transmettre des signaux (11) ;
(43) recevoir des signaux réfléchis (12) ; et
(44) obtenir une pluralité de détections (14, 25) de signaux réfléchis reçus (12) le long d'un champ de vision principal (4) durant au moins deux cycles radar, où chaque cycle radar comprend une pluralité de signaux FMCW,
(45) pour chaque cycle radar, former une carte de densité spectrale (30) qui comprend un spectre de distance et d'angle pour chaque détection (14, 25) dans un quadrillage (30), ainsi qu'une quantité renvoyée calculée d'énergie réfléchie de détections stationnaires, en utilisant des détections (14, 25) le long du champ de vision principal (4) ; et
(46) combiner au moins deux cartes de densité spectrale (30) pour former une carte de densité spectrale combinée de telle sorte que chaque point de grille dans le quadrillage (30) se rapporte à une pluralité de détections acquises et accumulées durant un certain temps ;
où le procédé comprend en outre :
(47) déterminer que chaque partie de la carte de densité spectrale combinée qui a donné lieu à une quantité d'énergie réfléchie dépassant un certain seuil constitue une zone (20) qui est ignorée dans un traitement ultérieur de données radar acquises.

5. Procédé selon la revendication 4, dans lequel chaque carte de densité spectrale (30) est calculée soit en utilisant des données d'une fonction FFT, transformée de Fourier accélérée, de distance soit en utilisant une fonction FFT du Doppler.

6. Procédé selon l'une quelconque des revendications 4 ou 5, où le procédé comprend :
exécuter une intégration sur la carte de densité spectrale combinée acquise, et sélectionner et grouper ces détections (14) qui ont donné lieu à une quantité d'énergie réfléchie dépassant un certain seuil permettant à une ou plusieurs zones (20) qui sont ignorées dans un traitement ultérieur de données radar acquises, d'être formées.
